# FASCICULE DE BREVET EUROPEEN

(11) **EP 0 725 903 B1**
(45) Date de publication et mention de la délivrance du brevet: **14.01.1998**
(21) Numéro de dépôt: 95927753.4
(22) Date de dépôt: 03.08.1995
(51) Int. Cl.: F16B 19/10

(54) **RIVET PERFECTIONNE**
NIETE
IMPROVED RIVET

(30) Priorité: 26.08.1994 FR 9410331
(43) Date de publication de la demande: 14.08.1996
(73) Titulaire: Aser, F-42405 Saint-Chamond (FR)
(72) Inventeur: JAKOB, Horst, F-30360 Deaux (FR)
(74) Mandataire: Simonnot, Bernard
(86) Numéro de dépôt international: FR9501048
(87) Numéro de publication internationale: WO9607031

(56) Documents cités:
- WO-A-95/22008
- DE-A- 1 752 343
- FR-A- 2 106 270
- FR-A- 2 247 587
- US-A- 3 477 336
- US-A- 3 494 246
- US-A- 4 355 531

## Description

Des rivets de diverses sortes sont connus. La présente invention concerne un perfectionnement d'un rivet du type général composé de deux parties, une partie constituée par un rivet creux et une autre partie constituée par une partie ogivale creuse, faisant l'objet de la demande de brevet EP-A-0 693 163 (état de la technique au sens de l'article 54(3) CBE) du déposant de la présente demande.

Dans ce type de rivet, appelé par le déposant rivet-clou, la partie ogivale creuse est emmanchée sur le rivet creux jusqu'à un épaulement de la partie formant rivet creux et sert d'abord à traverser les couches de matières, généralement planes, qu'il s'agit d'assembler, en étant poussé par le rivet creux sur lequel sont effectués des battements, manuels, mécaniques, pneumatiques, ou hydrauliques, ou sur lequel est exercée une pression continue, mécanique, pneumatique, ou hydraulique, les matières qu'il s'agit d'assembler ayant été placées au préalable contre une surface plane, dure et fixe servant de contre-appui. Lorsque, ayant traversé l'ensemble des couches de matières qu'il s'agit d'assembler, soit en les perforant soit en passant par des trous réalisés au préalable, la partie ogivale creuse arrive contre la surface servant de contre-appui, elle se déforme en s'écrasant contre ladite surface et, la déformation se poursuivant, elle déforme à son tour la base circulaire creuse du rivet creux, pour finalement aboutir à pincer les matières qu'il s'agit d'assembler entre d'une part la tête, préexistante, du rivet creux et d'autre part une nouvelle tête formée par la partie ogivale déformée et par la base circulaire évasée de la partie rivet creux. Dans la description détaillée d'exemples de réalisation accompagnée de figures, qui va suivre, une figure montrera les étapes du rivetage de ce rivet creux qui sert de base à la présente demande. Dans la demande précédente, avaient été proposés, en tant que perfectionnements du rivet creux, divers moyens tendant à améliorer la déformation de la partie ogivale, ainsi que celle de la partie rivet creux. Parmi ces moyens, il avait été prévu d'insérer une bille à l'intérieur du rivet-clou afin d'améliorer notamment la déformation de la base circulaire du rivet creux et de constituer finalement un assemblage du type sandwich ne laissant, pas de jeu entre la partie ogivale déformée, la bille et l'extrémité circulaire creuse déformée de la partie rivet creux.

La présente invention a pour but d'apporter un perfectionnement décisif au rivet-clou précédent qui vient d'être décrit, et qui donne déjà de bons résultats, et ce de façon simple et économique, ce perfectionnement consistant à simplifier sa mise en place et à garantir une déformation la plus parfaite possible de la base circulaire du rivet creux, et celle de la partie ogivale creuse, en vue d'obtenir un assemblage le plus indéformable possible.

Ce but est atteint, selon la présente invention, par un rivet-clou du type général décrit plus haut, dans lequel entre la partie ogivale creuse et la partie rivet creux est inséré partiellement à l'intérieur de la partie rivet creux un corps de forme extérieure approximativement conique, dont la pointe est orientée vers la partie creuse de la partie rivet creux et dont la base est orientée dans la direction opposée, le corps de forme extérieure conique étant de préférence pincé entre la base circulaire creuse de la partie rivet creux et la périphérie intérieure de la partie ogivale, afin d'éviter qu'il ne bascule et de le maintenir de ce fait dans la position décrite plus haut, aux cours des diverses manipulations que subit le rivet creux selon l'invention avant d'être utilisé.

Le corps de forme extérieure approximativement conique peut être plein, mais il peut aussi consister par exemple en une coupelle conique, ou approximativement conique. Des essais ont montré qu'avec des coupelles en tôle découpée et emboutie, on obtient d'excellents résultats. Mais des résultats tout aussi excellents sont obtenus avec des corps de forme extérieure non parfaitement coniques, mais dont la forme de surface extérieure est celle d'un hyperboloide ou d'un paraboloîde de révolution, se rapprochant de celle d'un cône.

Lors de l'utilisation du rivet-clou selon l'invention, la partie ogivale joue le même rôle que dans le cas du rivet-clou de la précédente demande du même déposant, mais la présence du corps de surface extérieure conique contribue, comme précédemment la bille, à une déformation régulière de la base circulaire de la partie rivet creux, et à celle de la partie rivet-clou, mais plus efficacement du fait de la pente de la surface extérieure conique, et de plus l'assemblage sandwich finalement réalisé est particulièrement robuste, car constitué de trois couches serrées à plat les unes contre les autres, qui rendent la déformation de l'ensemble pratiquement impossible.

Dans une forme de réalisation particulièrement efficace deux rivets-clous sont réunis par une partie commune formant une tête commune la mise en phase s'effectuant simultanément pour les deux rivets-clous en battant la partie commune ou en exercant sur elle une poussée continue.

On comprendra mieux l'invention grâce à la description qui suit, de deux exemples de réalisation, non limitatifs, en rapport avec le dessin.

La figure 1 représente un rivet creux de la demande précédente du déposant, au cours des différentes étapes de sa déformation.

La figure 2 représente un exemple de rivet-clou selon l'invention de la présente demande, au cours des différentes étapes de sa déformation.

La figure 3 représente un autre exemple de rivet-clou selon l'invention de la présente demande, au cours des différents étapes de sa déformation.

La figure 4 représente un rivet-clou double selon l'invention.

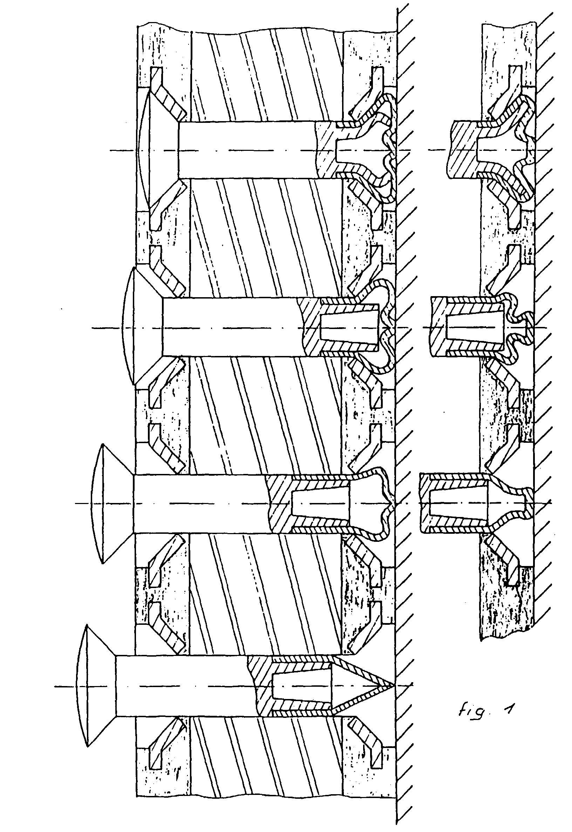

La figure 1 représente l'assemblage d'éléments plats disposés en deux ou plusieurs couches, munis, ou non, au préalable de trous pour le passage du rivet-clou. Avec le rivet-clou il n'est utile de perforer au préalable que les matériaux durs que le rivet-clou ne pourrait pas traverser, par exemple des agrafes métalliques ou en matière plastique dure utilisées pour la jonction de bandes transporteuses, les bandes transporteuses elles-mêmes ne nécessitant pas d'être perforées au préalable du fait que le rivet-clou les traverse aisément. On remarque que le rivet creux, en phase finale, est évasé et qu'il s'applique contre la paroi du clou ogival creux, lui-même déformé, pour former une nouvelle tête à l'opposé de la tête préexistante du rivet creux.

Cependant il n'est pas absolument garanti que, dans tous les cas de mise en oeuvre du rivet-clou, tant la déformation de la partie rivet creux que celle de la partie ogivale creuse s'effectuent de façon parfaitement régulière.

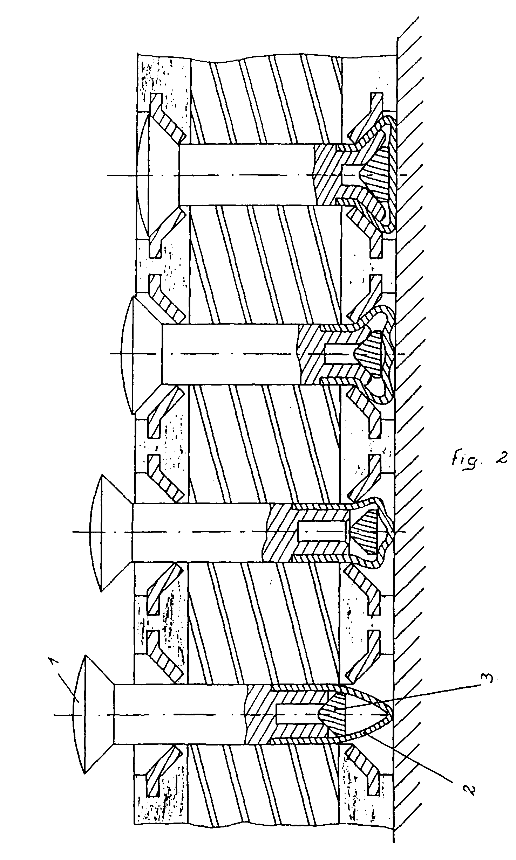

Dans le rivet-clou, selon la présente invention, de la figure 2, on distingue la partie rivet creux 1, la partie ogivale creuse 2 et un corps plein conique 3.

On remarque que dans la phase I de la figure 2 la partie ogivale creuse commence sa déformation, puis qu'en phase II le corps plein conique 3 se trouve relativement libéré.

En phase III, la déformation de la partie ogivale creuse 2 se poursuivant, le corps plein conique 3 est appliqué contre la périphérie de la base circulaire creuse de la partie rivet creux 1 et commence à la déformer en l'évasant. En phase IV toutes les déformations sont achevées et la base circulaire creuse de la partie rivet creux 1 est complètement évasée et forme avec le corps plein conique 3 et la partie ogivale creuse 2 un assemblage à plat dont les trois composants sont serrés les uns contre les autres, sans jeu. Ainsi se trouve formée une seconde tête, pratiquement indéformable. Au cours d'essais destructifs, il s'est avéré que c'est le fût de la partie rivet creux qui cassait avant toute déformation de la nouvelle tête obtenue avec les trois composants. Comme cette caractéristique de rupture est facile à déterminer et à contrôler lors de la fabrication du rivet-clou selon l'invention, l'invention permet d'éviter définitivement les aléas liés à la pose d'un rivet, tout en conservant les avantages du rivet-clou selon la précédente demande du déposant, à savoir le fait qu'il n'est pas nécessaire de réaliser au préalable des trous dans les matières plastiques, et le caoutchouc, même armés, comme par exemple dans le cas d'une bande transporteuse.

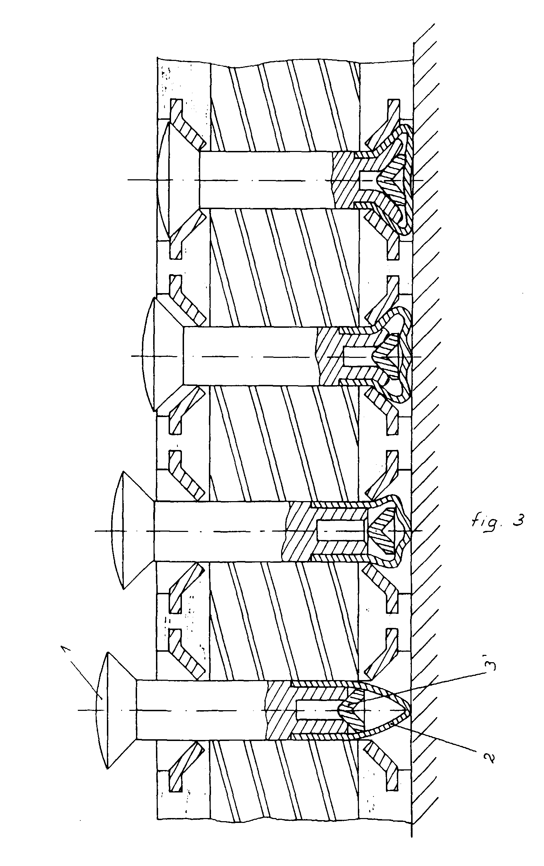

Sur la figure 3, le corps plein 3 est remplacé par une coupelle conique 3', plus facile et moins coûteuse à fabriquer. Les phases I, II, III et IV montrent la coopération des trois composants à la déformation de la partie rivet creux, qui s'évase et de la partie ogivale creuse qui, une fois sa déformation terminée constitue avec la partie rivet creux 1 déformée et la coupelle conique un assemblage à plat sans jeu, jouant le rôle d'une nouvelle tête située à l'opposé de la tête préexistante du rivet creux, les matériaux à assembler étant solidement pincés entre ces deux têtes.

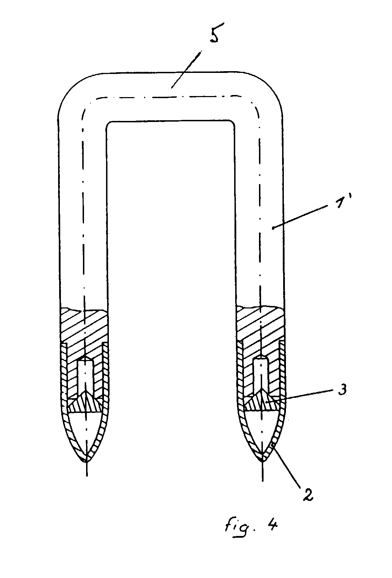

La figure 4 représente une autre forme de réalisation dans laquelle une partie commune 5, jouant le rôle de tête commune, relie deux rivets-creux même type que ceux décrits plus haut. Ce rivet double, analogue à un crampon dans sa partie formant la tête, présente l'intérêt d'obtenir une meilleure fixation qu'une tête simple, tout en accélérant les opérations puisque deux rivets sont implantés simultanément en battant la partie commune 5, ou en exerçant sur elle une poussée continue.

Le but poursuivi est ainsi atteint. Bien entendu des formes non parfaitement coniques, permettent d'obtenir des résultats équivalents. Par exemple une forme lenticulaire, biconcave, symétrique peut présenter un intérêt pour simplifier l'assemblage des trois composants en évitant une orientation de la tête 3.

## Revendications

1. Rivet-clou comportant deux parties principales, à savoir une partie formant rivet creux (1) présentant une tête et une tige cylindrique qui est raccordée à la tête dans le sens axial et dont l'extrémité située à l'opposé de l'extrémité portant la tête comporte un évidement cylindrique creux ménagé dans la tige cylindrique dans le sens axial de celle-ci sur au moins une partie de la longueur de la tige cylindrique, et une partie formant clou (2) comportant une tige cylindrique creuse se prolongeant de façon conique pour former une pointe, la partie formant clou (2) étant enfilée sur la tige cylindrique de la partie formant rivet creux (1) jusqu'à un épaulement pratiqué dans la surface extérieure de la tige cylindrique de la partie formant rivet creux (1), ou bien jusqu'à la base de la tête de la partie formant rivet creux (1) et, entre la partie formant clou et la partie formant rivet creux (1) est inséré, partiellement à l'intérieur de l'évidement de la partie rivet creux (1), un corps de forme extérieure approximativement conique (3) dont le sommet est orienté en direction de la tête de la partie formant rivet creux (1).

2. Rivet-clou selon la revendication 1, caractérisé en ce qu'il est associé à un autre rivet-clou identique, les deux rivets-clous étant réunis par une partie commune (5) perpendiculaire aux fûts des deux parties rivets-creux (1'), cette partie commune (5) jouant le rôle de tête commune aux deux rivets-creux (1').

3. Rivet-clou selon la revendication 1 ou 2, caractérisé en ce que le corps de forme extérieure approximativement conique(3)est un corps plein.

4. Rivet-clou selon la revendication 1 ou 2, caractérisé en ce que le corps de forme extérieure approximativement conique (3) est une coupelle creuse (3').

5. Rivet-clou selon la revendication 1, caractérisé en ce que le corps de forme extérieure approximativement conique (3) a une forme lenticulaire.

## Patentansprüche

1. Nietnagel mit zwei Hauptteilen, nämlich einem eine hohle Niete (1) bildenden Hauptteil, der einen Kopf und einen zylindrischen Stift aufweist, der in axialer Richtung mit dem Kopf verbunden ist und dessen Ende, das dem Ende entgegengesetzt ist, das den Kopf trägt, eine hohle zylindrische Ausnehmung aufweist, die in dem zylindrischen Stift in axialer Richtung wenigstens über einen Teil der Länge des zylindrischen Stifts vorgesehen ist, sowie einem einen Nagel (2) bildenden Teil mit einem hohlen zylindrischen Stift, der sich konisch verlängert, um eine Spitze zu bilden, wobei der den Nagel (2) bildende Teil auf den zylindrischen Stift des die hohle Niete (1) bildenden Teils bis zu einer Schulter eingelassen ist, die in der Außenfläche des zylindrischen Stifts des die hohle Niete (1) bildenen Teils vorgesehen ist, oder aber bis zur Basis des Kopfes des die hohle Niete (1) bildenden Teils, und zwischen dem den Nagel bildenden Teil und dem die hohle Niete (1) bildenden Teil teilweise im Inneren der Ausnehmung des Teils der hohlen Niete (1) ein Körper (3) mit in etwa konischer Form eingefügt ist, dessen Scheitel in Richtung des Kopfes des die hohle Niete (1) bildenden Teils orientiert ist.

2. Nietnagel nach Anspruch 1, dadurch gekennzeichnet, daß er einem weiteren identischen Nietnagel zugeordnet ist, wobei die beiden Nietnägel durch einen gemeinsamen Teil (5) senkrecht zu den Schäften der beiden Nietnagelteile (1') verbunden sind und dieser gemeinsame Teil (5) die Rolle eines gemeinsamen Kopfes für die beiden Nietnägel (1') spielt.

3. Nietnagel nach Anspruch 1 oder 2, dadurch gekennzeichnet, daß der Körper (3) mit in etwa konischer äußerer Form ein Vollkörper ist.

4. Nietnagel nach Anspruch 1 oder 2, dadurch gekennzeichnet, daß der Körper (3) mit in etwa konischer äußerer Form eine hohle Schale (3') ist.

5. Nietnagel nach Anspruch 1, dadurch gekennzeichnet, daß der Körper (3) mit in etwa konischer äußerer Form linsenförmig ist.

## Claims

1. Rivet-nail comprising two main parts, namely a part forming a hollow rivet (1) presenting a head and a cylindrical stud axially linked to the head, the end of which located opposite to the end carrying the head, comprises a hollow cylindrical recess provided in the cylindrical stud in the axial direction of this latter over at least a part of the cylindrical stud length, and a part forming a nail (2) comprising a hollow cylindrical stud extended in a conical shape to form a tip, the nail part (2) being sleeved over the cylindrical stud of the hollow rivet part (1) upto a shoulder formed on the external surface of the cylindrical stud of the hollow rivet part (1), or otherwise upto the base of the head of the hollow rivet part (1) and, between the nail part and the hollow rivet part (1), a body (3) of approximately conical external shape, the top of which is oriented towards the direction of the head of the hollow rivet part (1), is partially inserted inside the recess of the hollow rivet part (1).

2. Rivet-nail according to claim 1, characterised by the fact that it is associated to another identical rivet-nail, the two rivets-nails being linked by a common part (5), perpendicular to the studs of the two hollow rivets parts (1'), this common part (5) acting as a common head for the two hollow rivets (1').

3. Rivet-nail according to claim 1 or 2, characterised by the fact that the body (3) , of approximately conical external shape, is a solid body.

4. Rivet-nail according to claim 1 or 2, characterised by the fact that the body (3) of approximately conical external shape is a hollow cup (3').

5. Rivet-nail according to claim 1, characterised by the fact that the body (3), of approximately conical external shape, has a lenticular shape.
